# EUROPÄISCHE PATENTSCHRIFT

(11) **EP 0 812 541 B1**
(45) Veröffentlichungstag und Bekanntmachung des Hinweises auf die Patenterteilung: **23.10.2002**
(21) Anmeldenummer: 97108667.3
(22) Anmeldetag: 30.05.1997
(51) Int. Cl.: A21D 2/32, A21D 2/16

(54) **Lysolecithin-Fett-Mischung in der Backanwendung**
Lysolecithin and fat mixture for use in baking
Mélange lysolécithine et graisse pour utilisation en boulangerie

(30) Priorität: 14.06.1996 DE 19623735
(43) Veröffentlichungstag der Anmeldung: 17.12.1997
(73) Patentinhaber: Lucas Meyer GmbH & Co, 20539 Hamburg 28 (DE)
(72) Erfinder: Schneider, Michael, Dr., 20539 Hamburg (DE); Scharf, Karl, 97422 Schweinfurt (DE)
(74) Vertreter: DIEHL GLAESER HILTL & PARTNER

(56) Entgegenhaltungen:
- EP-A- 0 075 463
- EP-A- 0 426 211
- EP-A- 0 523 238
- DE-A- 3 616 594
- DE-A- 3 616 597
- INOUE Y ET AL: "STUDIES ON FROZEN DOUGHS. IV EFFECT OF SHORTENING SYSTEMS ON BAKING AND RHEOLOGICAL PROPERTIES" CEREAL CHEMISTRY, Bd. 72, Nr. 2, 1. März 1995, Seiten 221-226, XP000498901
- DATABASE WPI Section Ch, Week 9709 Derwent Publications Ltd., London, GB; Class B07, AN 97-095479 XP002099232 -& JP 08 333378 A (TSUJI SEIYU KK) , 17. Dezember 1996
- PATENT ABSTRACTS OF JAPAN vol. 018, no. 204 (C-1189), 11. April 1994 -& JP 06 007070 A (TAIYO KAGAKU CO LTD), 18. Januar 1994
- M.R. KWEON ET AL.: "Phospholipid hydrolysate and antistaling amylase effects on retrogradation of starch in bread" JOURNAL OF FOOD SCIENCE., Bd. 59, Nr. 5, 1994, Seiten 1072-1080, XP002099231 CHICAGO US

## Beschreibung

Die Erfindung betrifft eine Mischung aus Lysolecithin- bzw. Lysolecithinfraktion und einem pflanzlichen oder tierischen Fett in der Backanwendung.

Traditionell werden sowohl Lecithine als auch Lecithinfraktionen bei der Herstellung von Backwaren als Backadditive (Zusatzstoffe) verwendet EP-A-0 075 463. Auch ist der Einsatz von Backmitteln für Hefeteige und Brötchenteige bekannt (DE 3 616 594 A1, DE 3 616 597 A1), die neben einer Fettkomponente auch eine Phospholipidfraktion enthalten, deren Gehalt an Phosphatidylcholin höher als der von Phosphatidylethanolamin ist. An den Einsatz von Lysolecithin bzw. Lysolecithinfraktionen und eines Fettes mit einem höheren Schmelzpunkt ist hierbei nicht gedacht.

Auch kommen durch enzymatische Hydrolyse gewonnene Lysolecithine zum Einsatz.

Die genannten Lecithintypen zeichnen sich durch verschiedene Wirkungen wie:
- Erhöhung des Gebäckvolumens
- Stabilisierung des Klebernetzwerkes
- Verfeinerung der Krumenstruktur
- Verbesserung der Gärtoleranz
- Verbesserung der Frischhaltung
- Verzögerung des Altbackenwerdens
aus.

Die Funktionalität der Lecithine liegt sowohl in der Wechselwirkung mit dem Kleberprotein als auch mit der Amylose aufgrund seines grenzflächenaktiven Charakters begründet.

Überraschend wurde nun festgestellt und in Versuchsreihen belegt, daß durch Anwendung einer Mischung gemäß dem Anspruch eine Verbesserung der Funktionalität erreicht wird. Diese zeichnet sich durch eine zusätzliche ca. 5-10 %-ige Gebäckvolumensteigerung, eine verbesserte Krumenstruktur, eine verlängerte Frischhaltung und eine (1) in der Benotungsstufe lt. Dallmann-Tabelle aus (Porentabelle von Dallmann im Verlag Moritz Schäfer in Detmold, 4. Auflage 1981).

Unter Lysolecithinfraktionen werden durch Lösemittelbehandlung (vorwiegend Ethanol, Aceton, Propan, CO₂) gewonnene Produkte aus Lecithinen tierischer oder pflanzlicher Herkunft verstanden, die unter Verwendung von Enzymen (Phospolipasen, Lipasen beispielsweise) hydrolysiert wurden.

Die vorliegende Erfindung ist in einem Backhilfsmittel verkörpert, das sowohl zur Verbesserung des Backvorganges als auch der des Backproduktes beiträgt, insbesondere nämlich der Erhöhung des Gebäckvolumens und der Verbesserung des Frischhaltens des Backproduktes.

Die Erfindung wird nachstehend anhand der Protokolle der Weizenbackversuche veranschaulicht.

| WEIZENBACKVERSUCH Nr.1 | | | | |
|---|---|---|---|---|
| Versuchsreihe: | Rainlecithin, Lysolecithin, Lysolecithin/Fett-Compound | | | |
| | (Lysolec/Fett-Compound = 59% Fettfraktion CP 2907, 40% Lysolecithin, 1% Palmitinsäure) | | | |
| Ausgangsmehl: | Type 550 unbehandelt vom: | | 12.04.1998 | |
| Versuchsanordnung: | Gärzeit des Teiges: | | 2X30 Minuten | |
| | Gärraumbedingungen: | | 32°C/80% RLF | |
| | Backtemperatur/-zeit | | 240°C/30 Minuten | |

| Nr. | 1 | 2 | 3 | 4 |
|---|---|---|---|---|
| Faltzahl (s) | - | - | - | - |
| Mehifeuchtigkeit | 12,1 | 12,1 | 12,1 | 12,1 |
| Mehlmenge (g) | 489 | 489 | 489 | 489 |
| Flüssigkeit (ml) | 324 | 324 | 324 | 324 |
| Knetzeit (min) | 3 | 3 | 3 | 3 |
| Teigtemperatur (°C) | 25 | 25 | 25 | 25 |
| Teiggewicht (g) | 823 | 824 | 824 | 824 |
| Telgausbeute | 168,3% | 168,5% | 168,5% | 168,5% |
| Teigbaschaffanheit | | | | |
| Oberfläche | etwas faucht | normal | normal | normal |
| Elastizitat | etwas kurz | guter Stand | normal | geschmeidig |
| Teigeinlage (g) | 411,5 | 412 | 412 | 412 |
| Stückgärzeit (min) NG/ÜG | 45/55 | 45/55 | 45/55 | 45/55 |
| Brotgewicht (g) NG/ÜG | 348/341 | 342/335 | 344/338 | 340/338 |
| Brotvolumen (ml) NG/ÜG | 1200/1370 | 1350/1550 | 1320/1500 | 1400/1560 |
| Volumenausbeute | 1285 | 1450 | 1410 | 1480 |
| Volumensteigerung | 100,0% | 112,3% | 109,7% | 115,2% |
| Porenbild NG/ÜG | 5/3-4 | 5/4 | 4/3 | 6-75 |
| Rangfolge | 4 | 2 | 3 | 1 |
| Behandlung: (auf Mehl) | | | | |
| Reinlecithin | - | 0,4%AU | - | - |
| Lysolecithin | - | - | 0,4%AU | - |
| Lysolec./Fett-Compound | - | - | - | 0,4%AU |
| Ascarbinsäure | 2g/100kg | 2g/100kg | 2g/100kg | 2g/100kg |

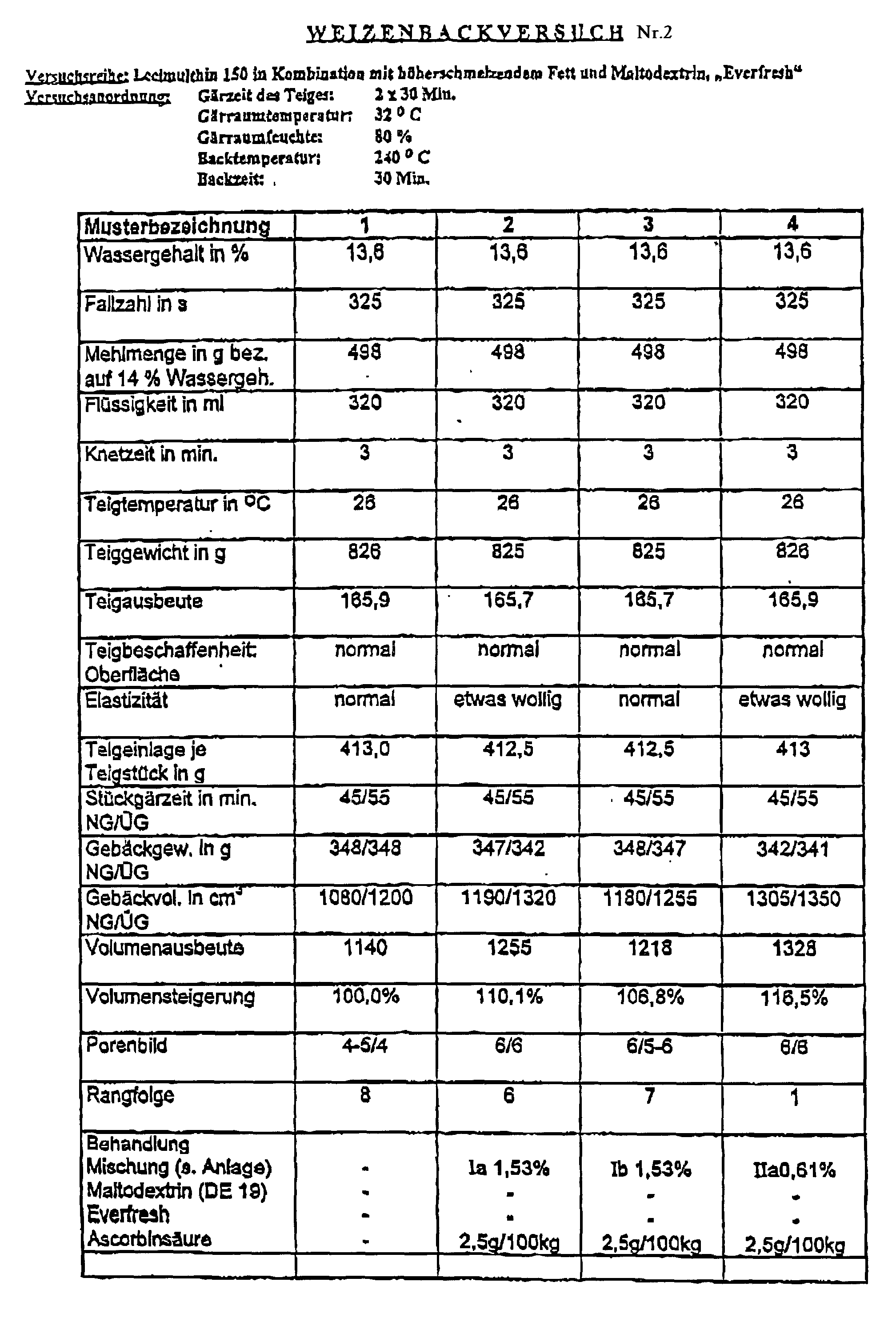

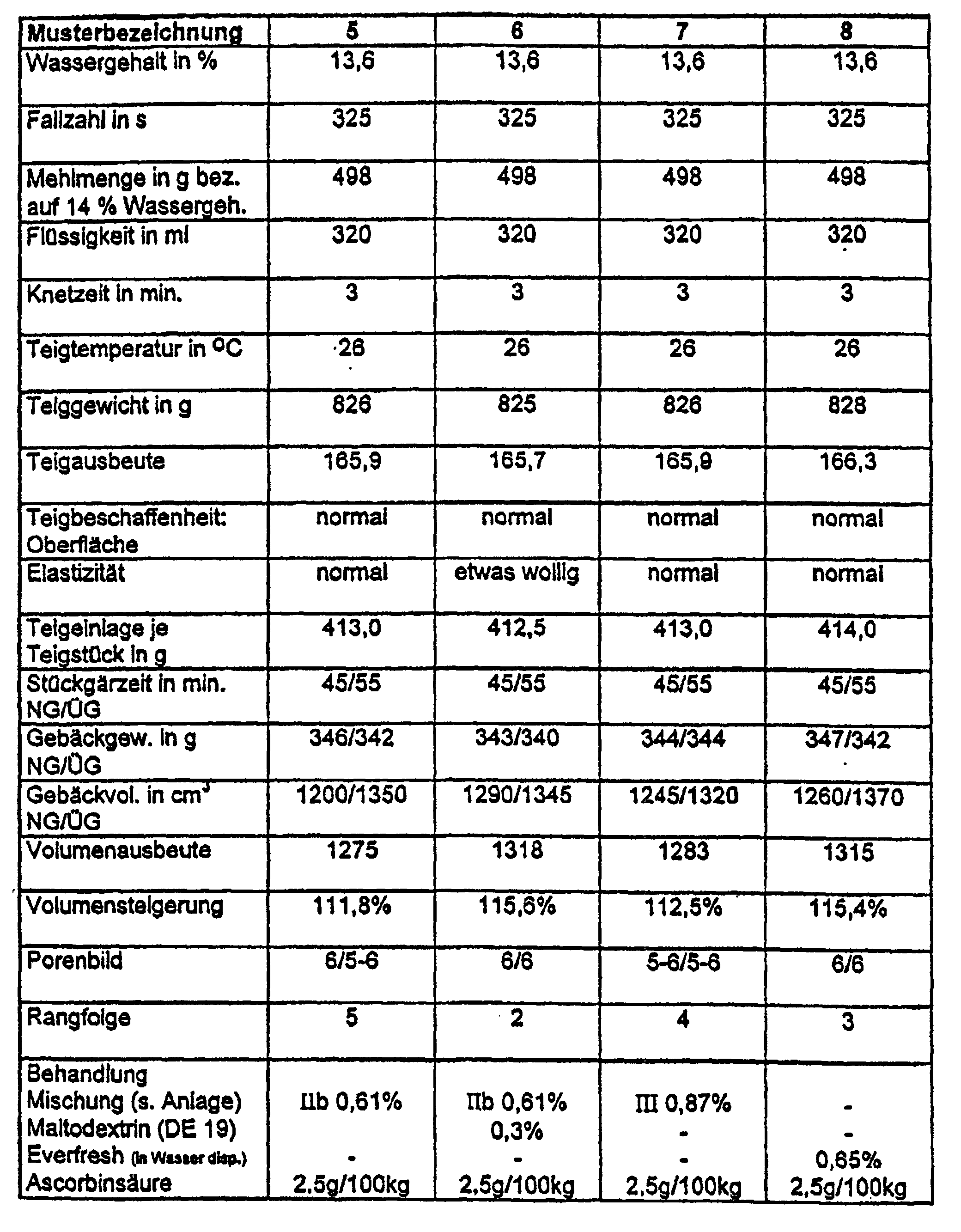

Anlage zum Backversuch Nr.2

| **Mischungen VP 618 + Fett:** | |
|---|---|
| Ia | 80% Fett "Revel A" |
| | 20% VP 618 |
| | |
| Ib | 80% Palmfett |
| | 20% VP 618 |
| | |
| IIa | 50% Fett "Revel A" |
| | 50% VP 618 |
| | |
| IIb | 50% Palmfett |
| | 50% VP 618 |
| | |
| III | 65% Palmfett |
| | 35% VP 618 |

### Produktbeschreibung:

REVEL A ist ein fraktioniertes, nicht gehärtetes, raffiniertes Pflanzenfett von nicht-laurischem Ursprung.

Chemisch-physikalische Kennzahlen (typische Analysenwerte):

| | | |
|---|---|---|
| Jodzahl (Wijs) | | 14 g/100g |
| Freie Fettsäure | (Ölsäure) | 0,05 % |
| Peroxydzahl | | 0,1 meqO2/kg |
| Trans Fettsäure (annähernd) | | <1 % |
| Lovibond Farbe (1" Zelle) | Gelb | 2 |
| | Rot | 0.5 |
| Prozent Festfettanteil bei | 20°C | 95 % |
| | 30°C | 90 % |
| | 35°C | 83 % |
| | 40°C | 75 % |
| Steigschmelzpunkt | | 58 °C |

Der prozentuale Festfettanteil ist bei den gegebenen Temperaturen mit Puls-NMR in nicht stabilisierten Mustern gemessen.
Nach Methode IUPAC 2.150(a).

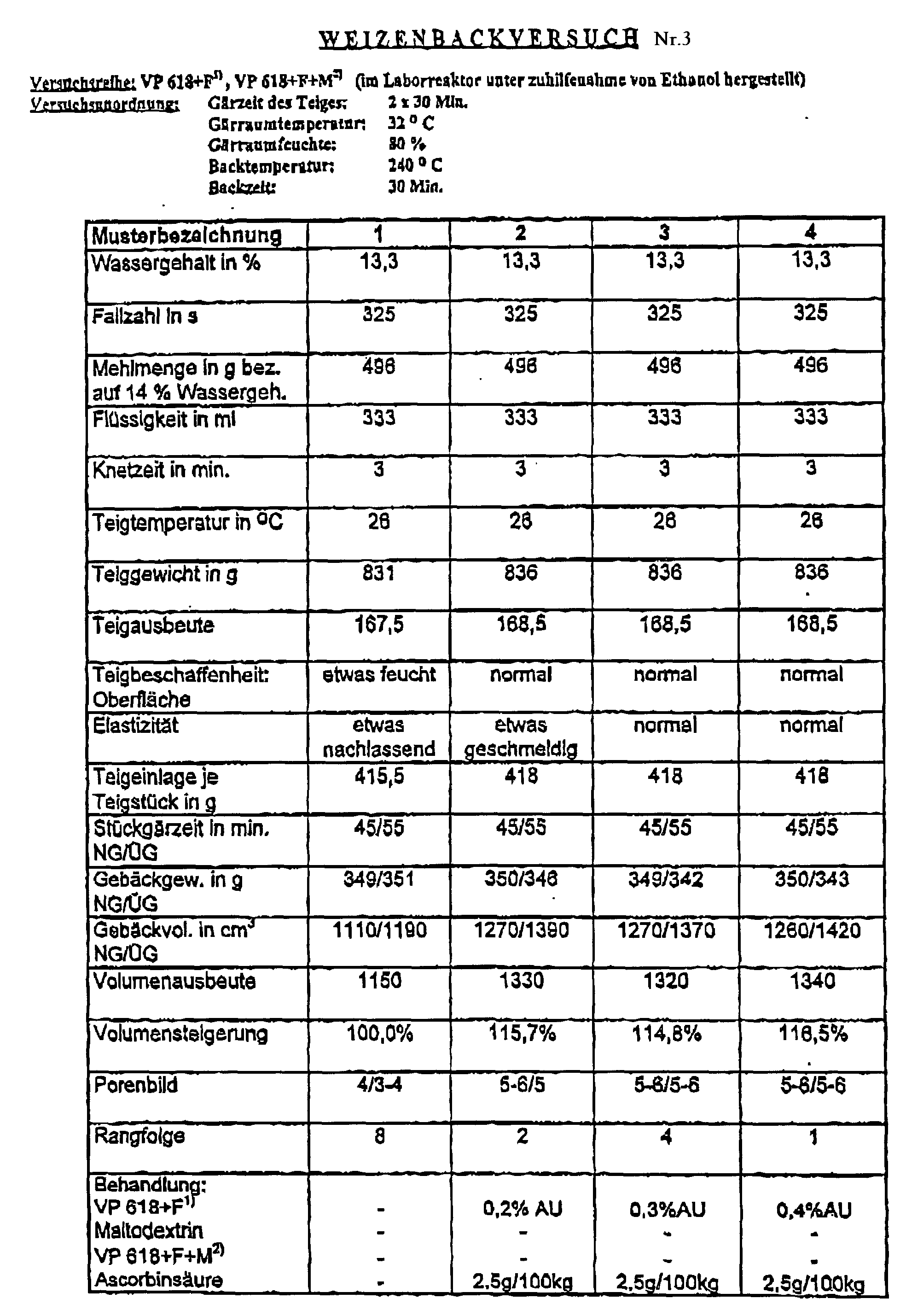

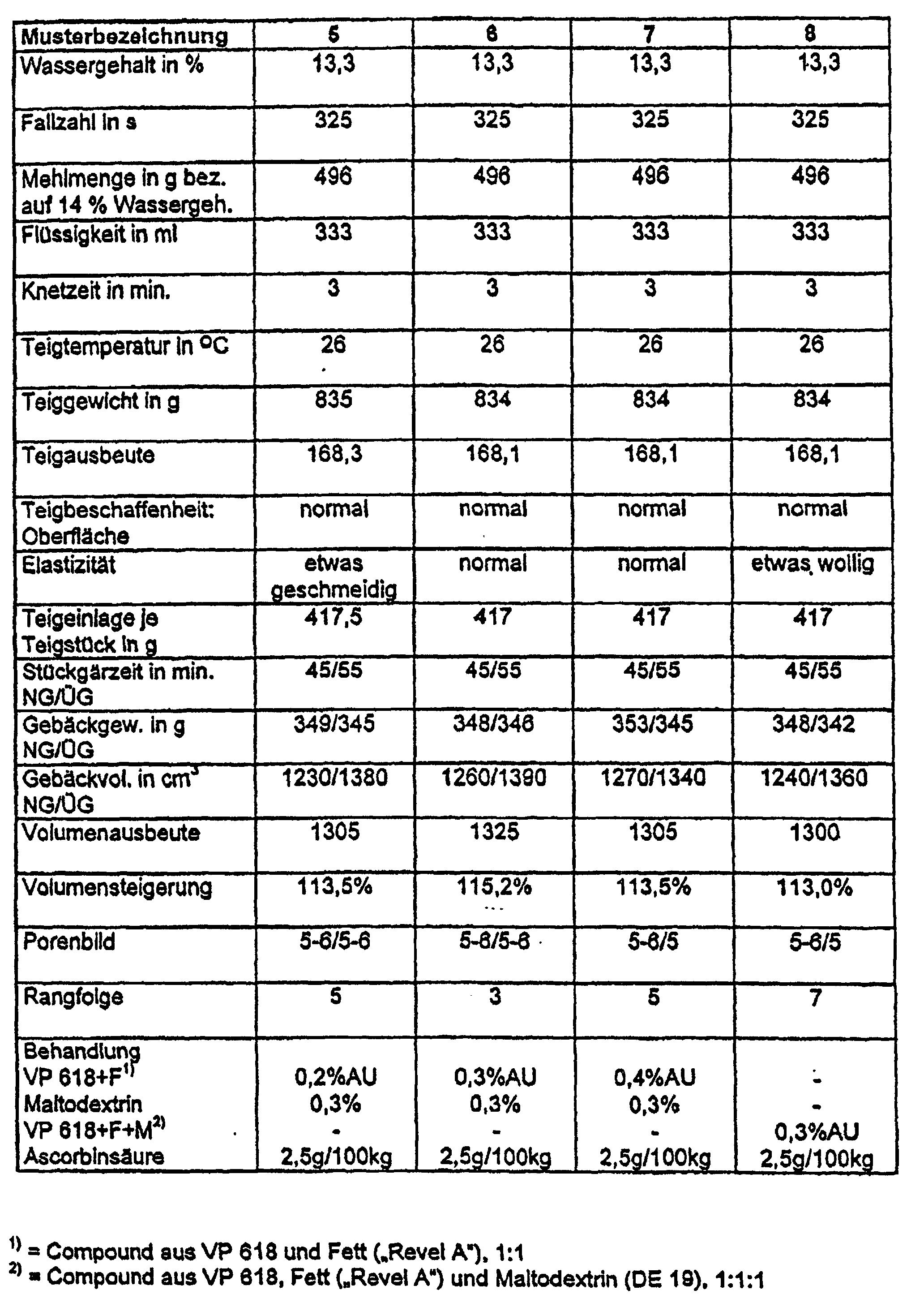

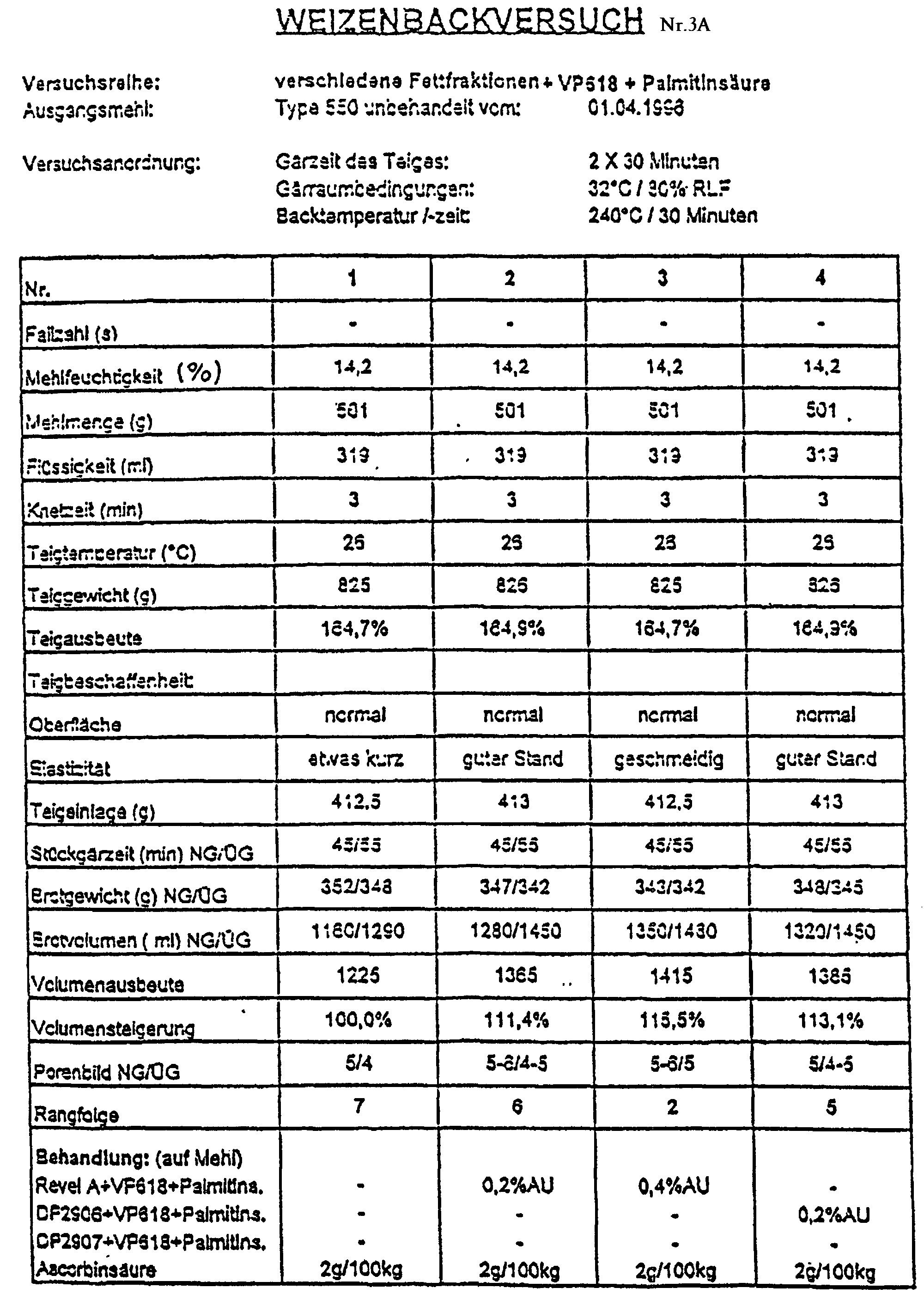

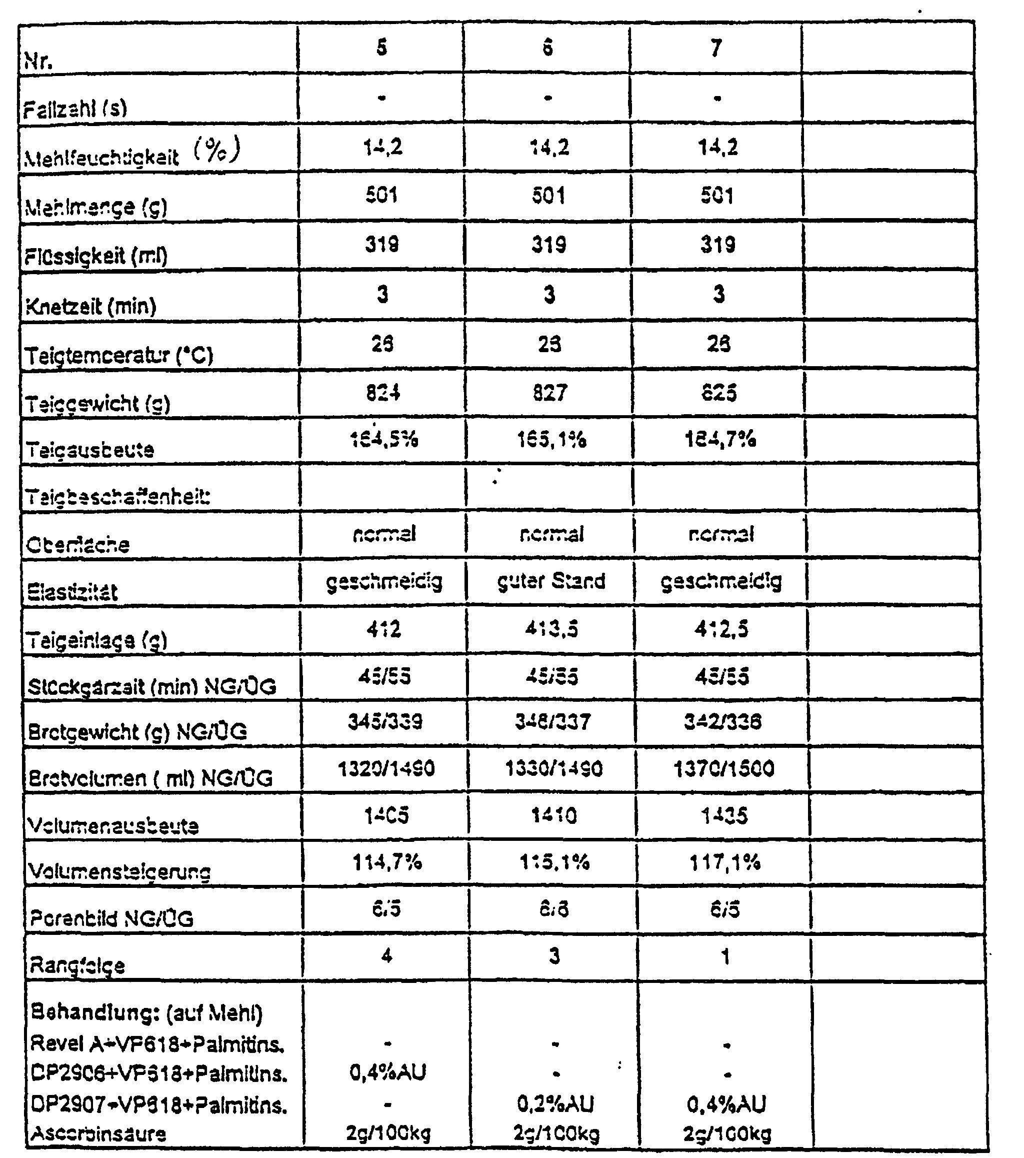

Gebäck Nr. 2 und 3 wiesen einige dunkle Flecken auf der Oberfläche auf.

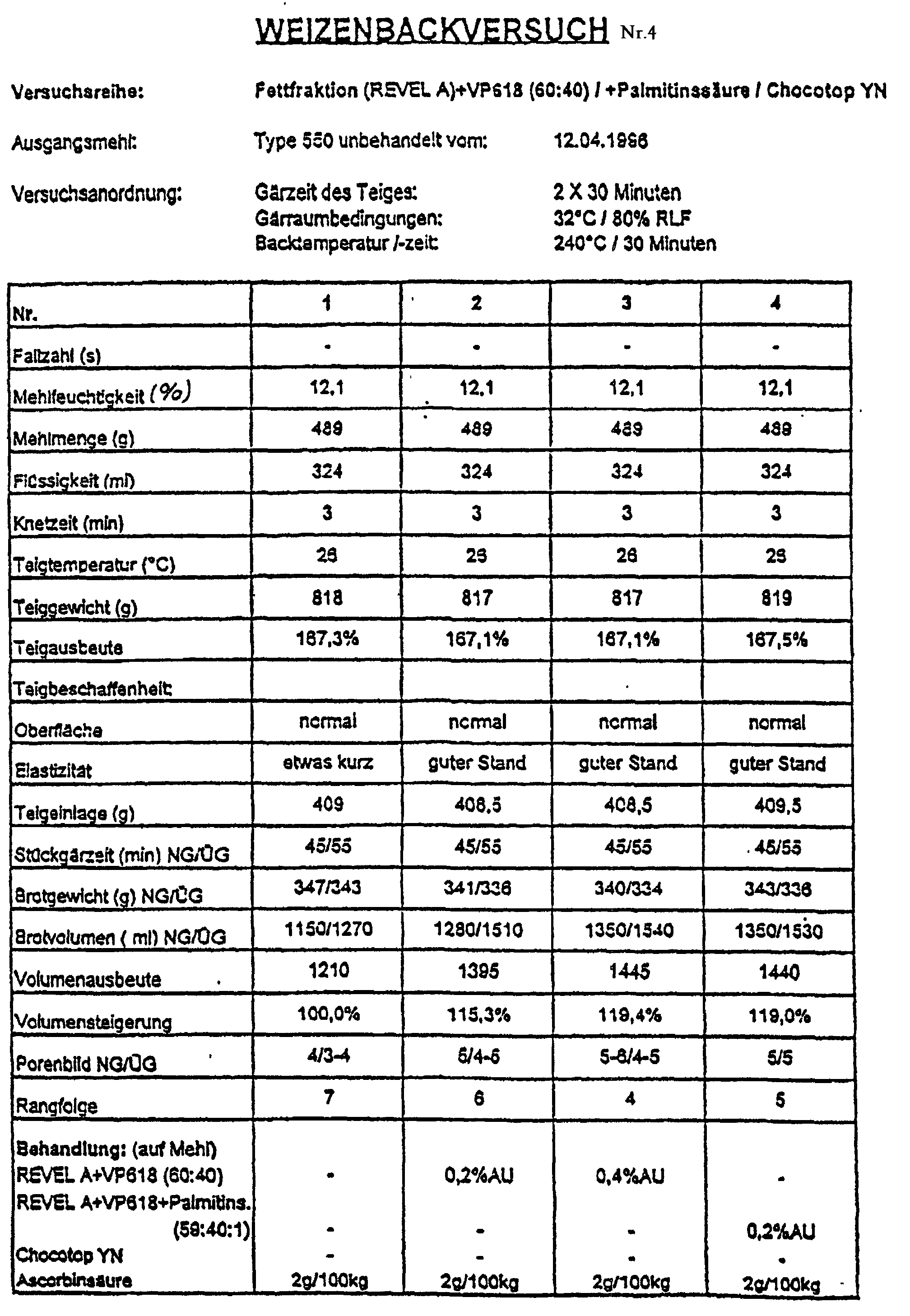

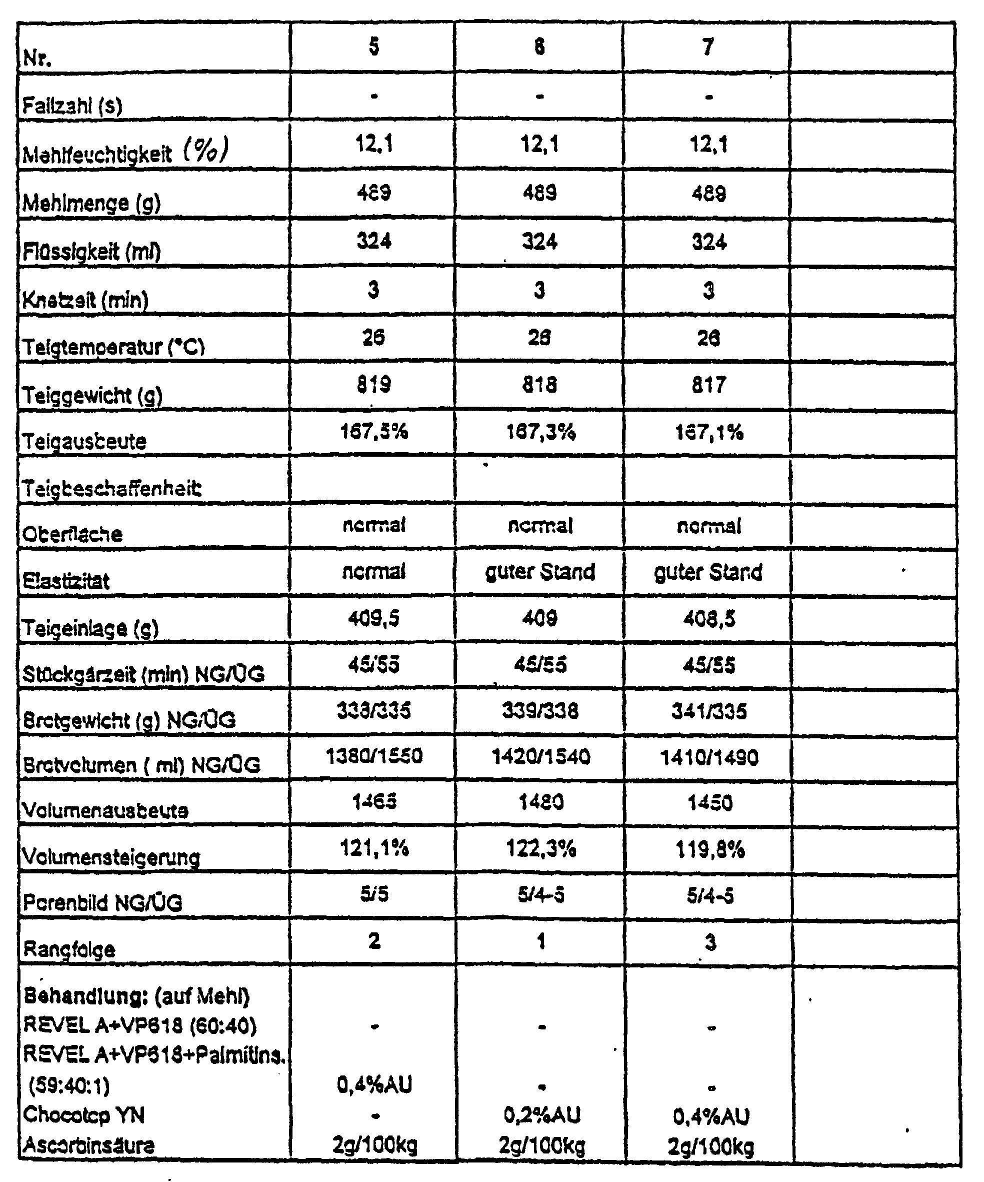

Gebäck Nr. 2 und 3 wiesen einige dunkle Flecken auf der Oberfläche auf.

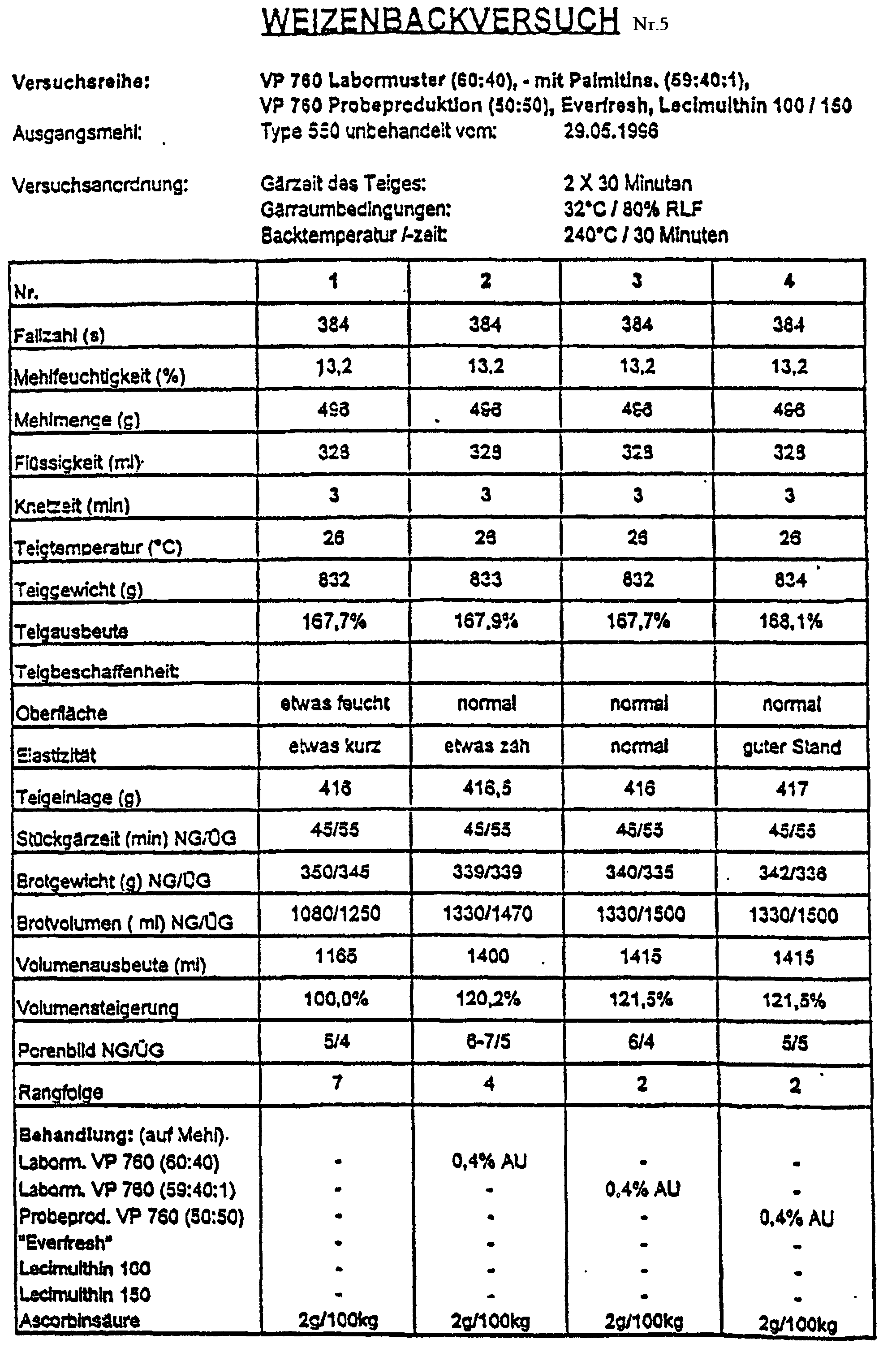

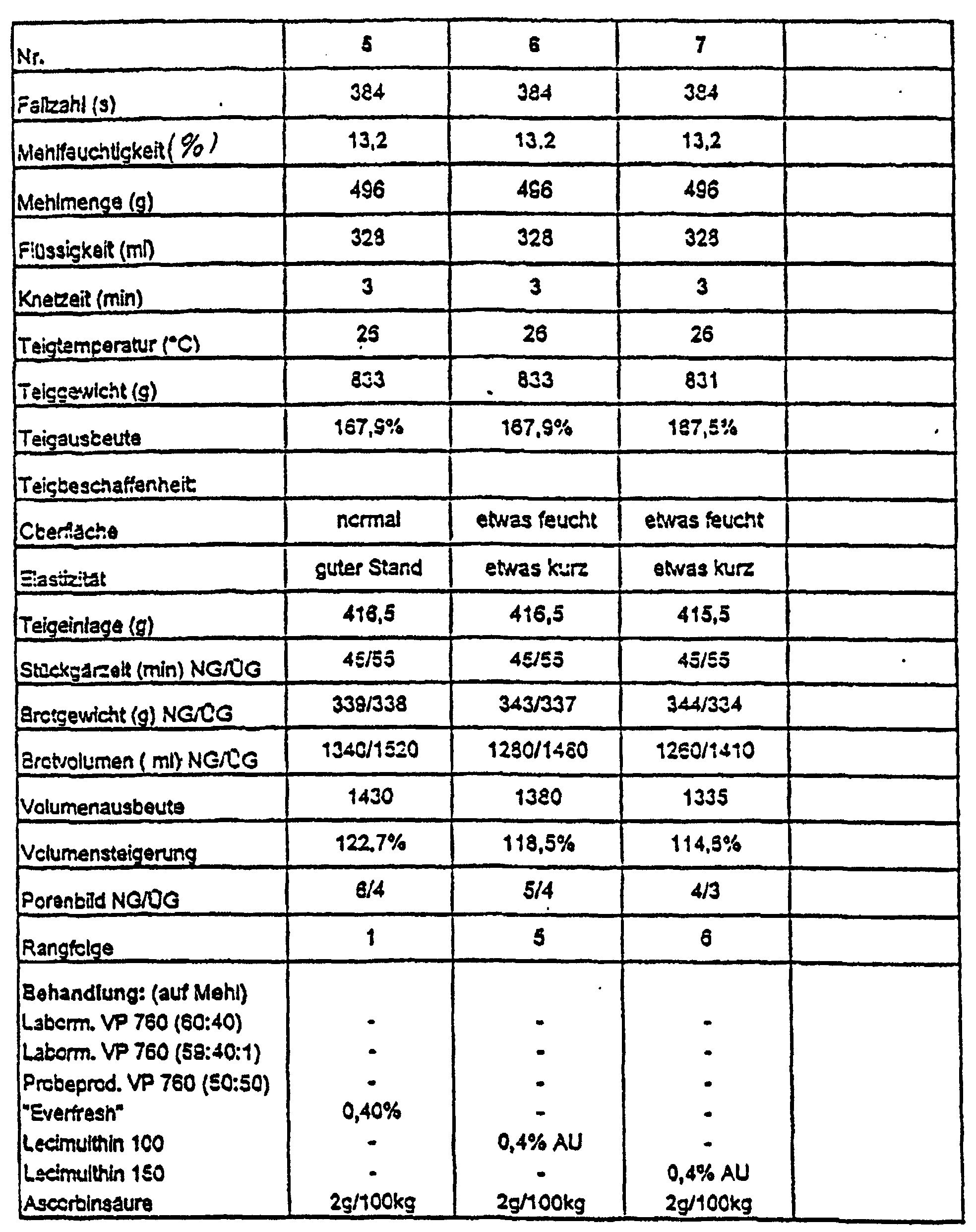

### Beurteilung:

Die Probeproduktion von VP-760 ist mit den Labormustern im Backergebnis vergleichbar.

Die Rieselfähigkeit der Probeproduktion ist besser als die der Labormuster.

Die Backergebnisse von VP-760 sind mit denen von "Everfresh" vergleichbar.

VP-760 ist eindeutig einfacher zu handhaben als "Everfresh".

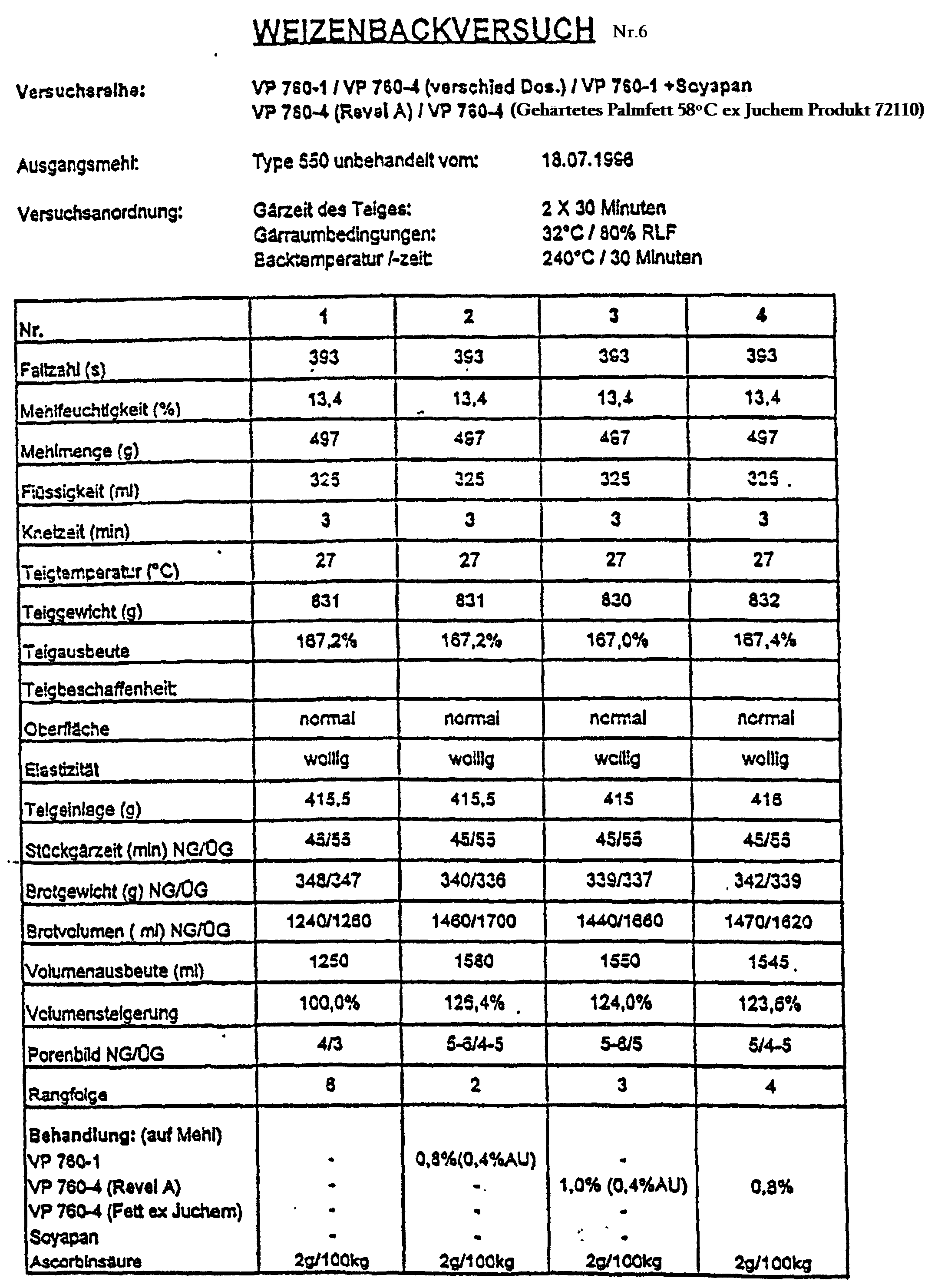

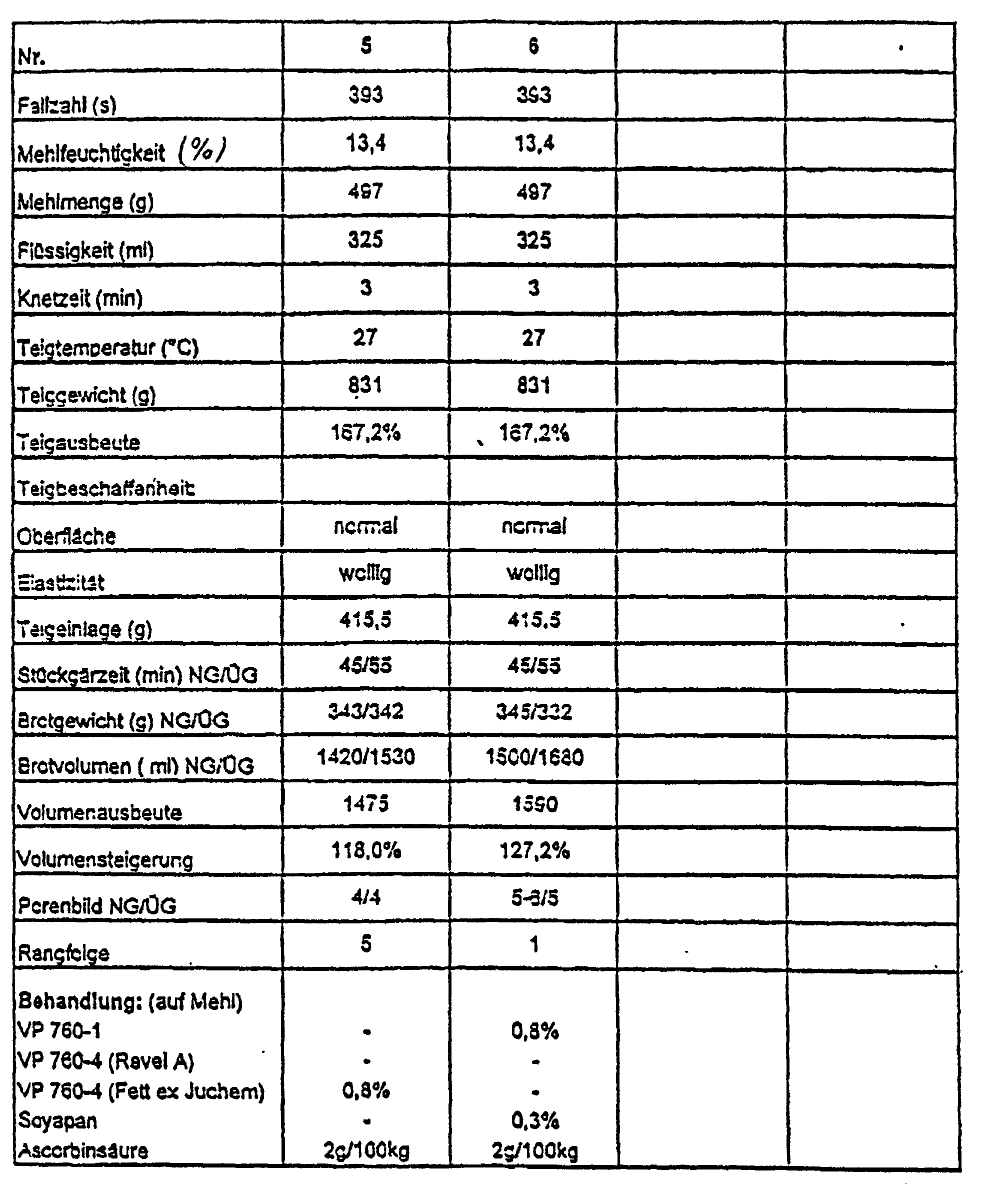

### Beurteilung:

Die Rezeptur VP 760-1 (50:50) zeigt hier etwas bessere Ergebnisse als die Rezeptur VP 760-4 (60:40).

Dieser Unterschied ist jedoch vernachlässigbar gering. Außerdern ist zu berücksichtigen, daß VP 760-1 aus einer Probeproduktion stammt, während es sich bei VP 760-4 um ein Labormuster handelt

Ein Unterschied bei Dosierungen von 0,8 und 1,0 % des VP 760-4 ist nicht zu erkennen.

Die größte Volumensteigerung wurde durch eine Kombination von VP 760-1 mit Soyapan erzielt.

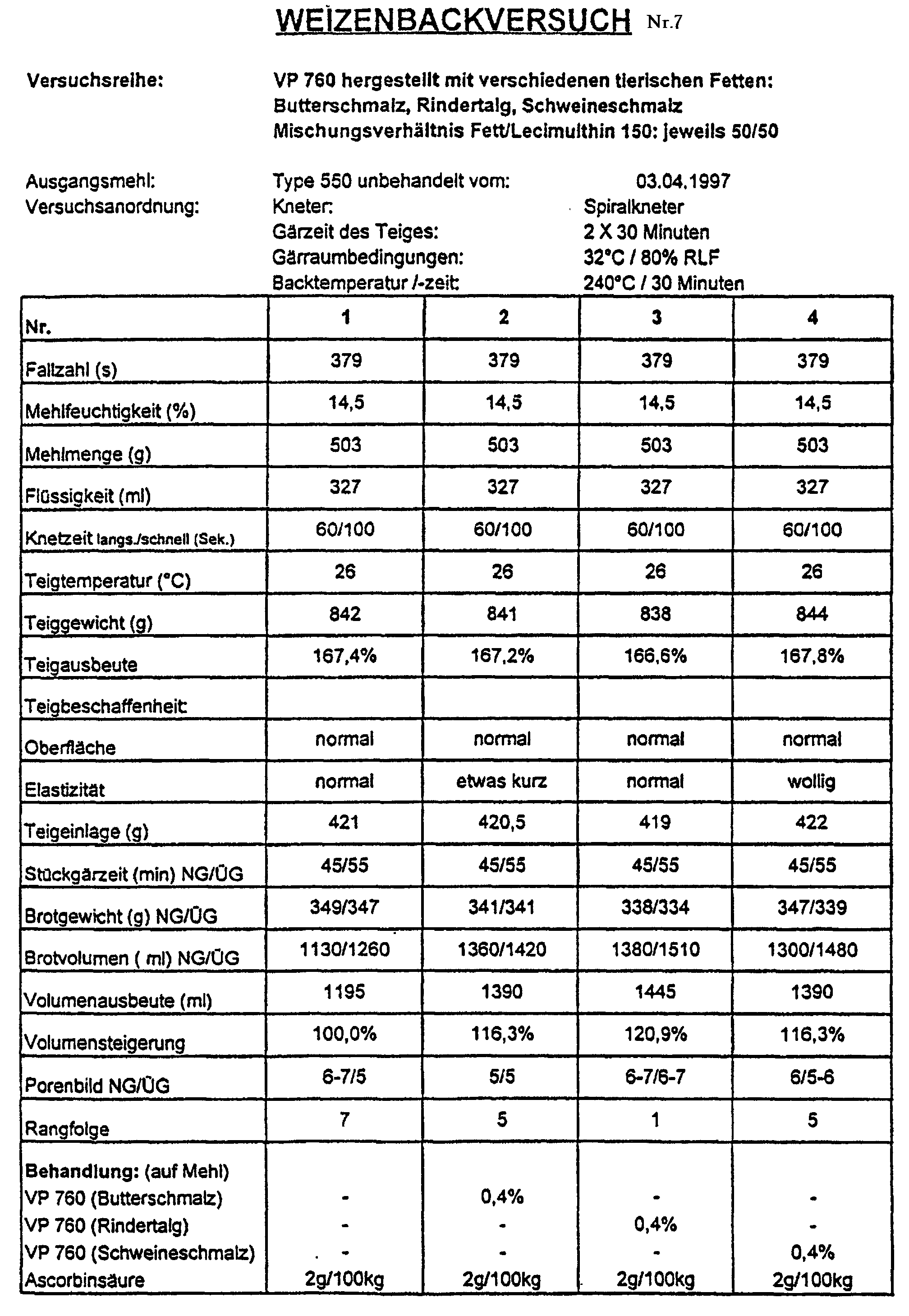

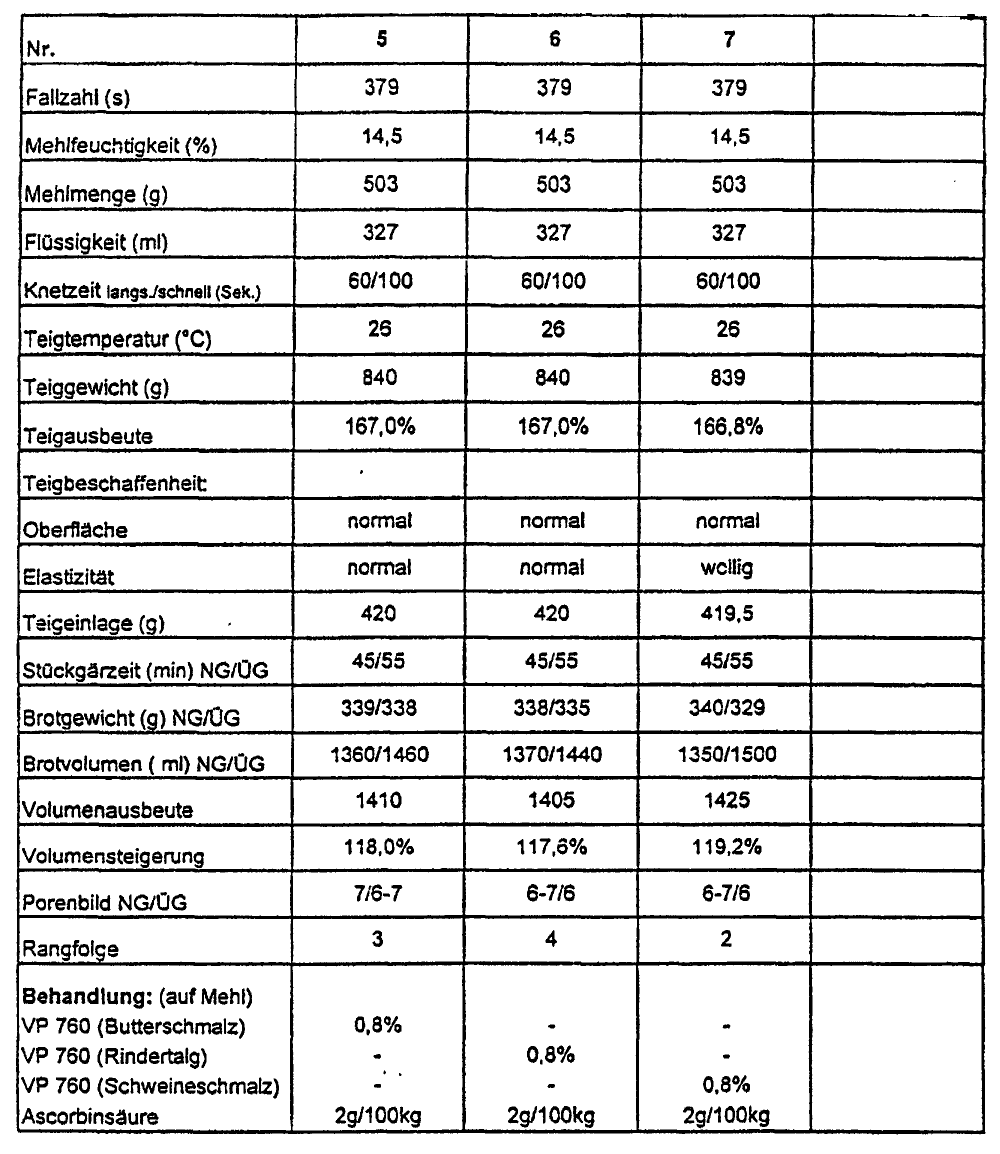

| REZEPTUREN VP 760 | |
|---|---|
| VP 760-1: | |
| REVEL A | 50 % |
| LECIMULTHIN 150 | 50 % |
| | |

| VP 760-2: | |
|---|---|
| REVEL A | 48 % |
| LECIMULTHIN 150 | 50 % |
| Palmitinsäure | 2 % |
| | |

| VP 760-3: | |
|---|---|
| REVEL A | 59 % |
| LECIMULTHIN 150 | 40 % |
| Palmitinsäure | 1 % |
| | |

| VP 760-4: | |
|---|---|
| REVEL A | 60 % |
| LECIMULTHIN 150 | 40 % |

### Liste der in den Backprotokollen verwendeten Abkürzungen, internen Bezeichnungen und Handelsnamen

- AU: Acetonunlösliches
- NG: Normalgare
- ÜG: Übergare
- Chocotop YN: Ammoniumphosphatide (Emulgator für die Schokoladenindustrie)

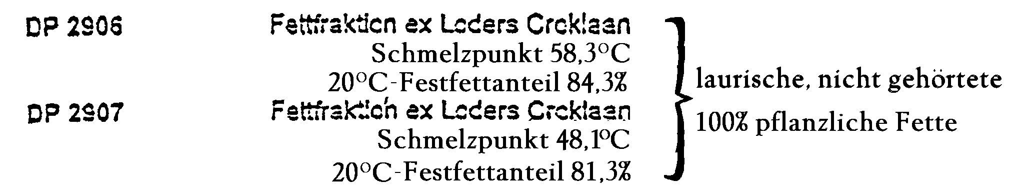

- Everfresh: Produkt des Fa VK Hühlen Food Service GmbH, identisch mit P1-Brotlecithin von Dr. Jodlbauer
- Lecimulthin 100: Reinlecithin
- Lecimulthin 150: Lysolecithin (=VP 618)
- Palmitins.: Palmitinsäure (vereinfacht die Herstellung des Compounds, beeinflußt aber seine Konsistenz nachteilig und kommt deshalb für uns nicht mehr in Betracht.)
- Revel A: Fett ex Loders Croklaan
- Soyapan: enzymaktives Vollsojamehl
- VP 618: Lysolecithin (=Lecimulthin 150)
- VP 760: Interne Bezeichnung des Lysolecithin/Fett-Compounds
- Butterschmalz: "Küchenpracht" der Fa Uelzena Milchwerke, welzen, gem. Butterschmolz -Verordnung (EWG) Nr. 429/90
- Rindertalg: Rinderspeisetalg, freie Fettsäuren max 2%, Iodzahl 46, Schmelzpunkt 44°C
- Schwerneschmalz: "LARU" der Fa. LARU Langensiepen & Ruckebier, Bottrop

## Patentansprüche

1. Anwendung einer Mischung aus Lysolecithin und/oder aus einer Lysolecithinfraktion mit jeweils einem Hydrolysegrad zwischen (5-85)% und jeweils in flüssiger oder entölter Form einerseits und andererseits einem höher schmelzenden pflanzlichen oder tierischen Fett mit einem Schmelzpunkt im Bereich von (25-70)°C als Backhilfsmittel für Weizenmehlteige, wobei das Mischungsverhältnis von Lysolecithin und/oder der Lysolecithinfraktion zu Fett zwischen 1:10 bis 10:1 liegt.

## Claims

1. Use of a mixture consisting of lysolecithin and/or a lysolecithin fraction each comprising a degree of hydrolysis between (5-85)% and each in liquid or deoiled form on the one hand, and of a higher-melting vegetable or animal fat with a melting point in the range of (25-70)°C as baking aid for wheat flour dough on the other hand, wherein the mixing ratio of lysolecithin and/or the lysolecithin fraction to fat is between 1:10 to 10:1.

## Revendications

1. Utilisation d'un mélange de lysolécithine et/ou d'une fraction de lysolécithine avec chaque fois un degré d'hydrolyse entre 5 et 85% et sous forme chaque fois liquide ou déshuilée d'une part et d'autre part d'une matière grasse à point de fusion élevé végétale ou animale avec un point de fusion dans l'intervalle de 25 à 70°C en tant qu'adjuvant de cuisson pour des pâtes de farine de blé, où la proportion du mélange de lysolécithine et/ou de la fraction de lysolécithine par rapport au lipide se trouve entre 1:10 et 10:1.
